Europäisches Patentamt

European Patent Office

Office européen des brevets

(11) Publication number: **0 317 631 B1**

# EUROPEAN PATENT SPECIFICATION

(45) Date of publication of patent specification: **03.03.93**

(51) Int. Cl.⁵: **C04B 28/18**, B28B 1/52, //(C04B28/18,14:02,14:38,16:02, 16:04,22:08,24:24)

(21) Application number: **87903916.2**

(22) Date of filing: **12.06.87**

(86) International application number: **PCT/JP87/00383**

(87) International publication number: **WO 88/09777 (15.12.88 88/27)**

(54) **CALCIUM SILICATE CRYSTAL BOARD.**

(43) Date of publication of application: **31.05.89 Bulletin 89/22**

(45) Publication of the grant of the patent: **03.03.93 Bulletin 93/09**

(84) Designated Contracting States: **AT BE CH DE FR GB IT LI NL SE**

(56) References cited:
JP-A- 5 991 009      JP-A- 6 183 667
JP-A-52 105 926      JP-A-52 135 330
JP-A-53 146 997      JP-B-53 012 526

(73) Proprietor: **JAPAN INSULATION Co., Ltd.**
**1-6, Daikoku 1-chome Naniwa-ku Osaka-shi Osaka 556(JP)**

(72) Inventor: **IDE, Tsutomu**
**1110-69, Oaza Kugo Ono-cho, Ibi-gun Gifu 501-05(JP)**
Inventor: **HAMADA, Suguru**
**3484-7, Nagabora Nagara Gifu-shi Gifu 502(JP)**

(74) Representative: **Vossius & Partner**
**Siebertstrasse 4 P.O. Box 86 07 67 W-8000 München 86 (DE)**

Rank Xerox (UK) Business Services
(3.10/3.5x/3.0.1)

**Description**

This invention relates to boards of calcium silicate crystals.

Japanese Examined Patent Publication No.40896/1973 discloses a board of calcium silicate crystals composed of secondary particles of xonotlite crystals and wood fibers. Said board is produced by forming a single layer of wet mat from an aqueous slurry of secondary particles of xonotlite crystals and wood fibers with use of a forming machine and press-molding the layer of wet mat with heating. The board of calcium silicate crystals obtained by such method is one press-molded from the single layer of wet mat and contains as the constituents the secondary particles of xonotlite crystals and wood fibers.

The board of calcium silicate crystals having the above construction is insufficient in the strength, particularly bending strength even if the board is composed predominantly of wood fibers or containing. 50% or more thereof. This tendency is pronounced in the board composed predominantly of calcium silicate crystals, more specifically containing a small amount of wood fibers and 50% or more of calcium silicate crystals. In particular the board containing 80% or more of calcium silicate crystals has an unsatisfactory strength. On the other hand, the smaller the amount of wood fibers, the more preferable the board is in view of incombustibility. However, the aforesaid technique can not produce boards sufficient in both the incombustibility and satisfactorily great strength. Further the foregoing method essentially employs wood fibers for production of articles of great strength. The publication teaches nothing about the use of inorganic fibers without or in place of wood fibers. Among the boards thus produced, those of large thickness tend to have a bending strength reduced due to the irregularity of strength caused by the difference in the proportions of calcium silicate crystals and wood fibers between the internal and external board portions. Further this tendency becomes marked in boards having a thickness of 20 mm or more.

US-A-4 162 924 refers to a shaped body of calcium silicate which is composed of globular secondary particles and optionally a fibrous component. The particles consist of xonotlite or foshagite crystals and can be mixed with a polyacrylic ester dispersion prior to molding.

An object of the present invention is to provide a board of calcium silicate crystals outstanding in mechanical strength, particularly bending strength.

Another object of the invention is to provide a board of calcium silicate crystals which contains a predominant amount of calcium silicate crystals and a small amount of wood fibers or inorganic fibers in lieu of wood fibers and which is thus incombustible and excellent in mechanical strength.

A further object of the invention is to provide a board of calcium silicate crystals which even with a large thickness is homogenous throughout the interior and excellent in mechanical strength.

The board of calcium silicate crystals according to the present invention is characterized in that the board is composed of a plurality of laminated thin sheets, each of the thin sheets having a thickness of 2 mm or less, containing secondary particles of calcium silicate crystals, a fibrous material and a polymeric coagulant as absorbed on the surface of the secondary particles, and being formed from the secondary particles interconnected with one another, said coagulant being a mixture of a cationic coagulant with an anionic coagulant or a nonionic coagulant, with the content of the cationic coagulant being about 0.05 to about 1.0% by weight and with the content of anionic or nonionic coagulant being about 0.01 to about 1.0% by weight of the board, and said superposed thin sheets being firmly united with one another into an integral body by the secondary particles of calcium silicate crystals present on the surface of the sheets.

Our research revealed the following. In the board of calcium silicate crystals formed from secondary particles of calcium silicate crystals and a fibrous material, the secondary particles retain the polymeric coagulant as adsorbed on the surface thereof and are interlocked with one another to form thin sheets and the plurality of thin sheets as superposed are firmly interconnected by the secondary particles on the surface of sheets into an integral sheet. With this structure, the board exhibits a significantly great mechanical strength even if composed predominantly of calcium silicate crystals and displays a great mechanical strength even if containing 20% or less of wood fibers or synthetic or inorganic fibers instead of wood fibers, and the board even of large thickness has a uniformly great mechanical strength as a whole.

Furthermore, unlike conventional asbestos cement slates, the boards of calcium silicate crystals according to the present invention have the advantages of being low in specific gravity, excellent in strength and in fabrication property such as nailability and easy to pattern on the surface.

When each of the thin sheets constituting the board of the invention contains at least one inactive substance selected from a carbonaceous substance, carbide, nitride, silicide and metallic oxide, as well as the secondary particles of calcium silicate crystals, fibrous material and coagulant, a board is obtained which has an outstanding heat insulation properties over a wide temperature range, particularly a high temperature range. Consequently the inclusion of said inactive substance in the board of the invention is among the preferred embodiments of the invention.

2

The secondary particles of calcium silicate crystals constituting the board of the invention are those of tobermorite crystals, xonotlite crystals and/or wollastonite crystals. Not only a single kind but two or more kinds of these crystals are usable. The secondary particles of calcium silicate crystals can be prepared, for example, by the methods disclosed in Japanese Examined Patent Publication No.12526/1978 and Japanese Unexamined Patent Publication No.146997/1978 in which a siliceous material and calcareous material are heated with stirring under an elevated pressure in an autoclave to undergo a hydrothermal synthesis reaction.

Examples of siliceous materials for producing the calcium silicate crystals are natural amorphous silicic acid, siliceous sand, silica gel, silica flour (such as ferrosilicon dust, etc.), white carbon, diatomaceous earth, silicas obtained by reacting aluminum hydroxide with hydrosilicofluoric acid produced as a by-product in the wet process for preparing phosphoric acid, and the like. Examples of useful calcareous materials include quick lime, slaked lime, carbide residuum, cement, etc. These siliceous and calcareous materials are usable singly or at least two of them can be used in mixture. The $CaO/SiO_2$ mole ratio of the calcareous material to the siliceous material is about 0.7 to about 0.9 in synthesis of tobermorite crystals and about 0.90 to about 1.15 in synthesis of xonotlite crystals.

A starting slurry is prepared by adding water to the siliceous material and calcareous material. The amount of water used for producing a starting slurry is 5 times or more, preferably 10 to 50 times, the amount by weight of the solids of the starting slurry. The starting slurry thus prepared is then subjected to a hydrothermal synthesis reaction with stirring. The reaction is conducted under a saturated aqueous vapor pressure of usually 4 $kg/cm^2$ or more, preferably 6 to 30 $kg/cm^2$, usually for about 0.5 to about 20 hours, thereby producing secondary particles of calcium silicate crystals. When further baked to about 1000°C, the xonotlite crystals obtained above by the hydrothermal synthesis reaction can be converted to $\beta$-wollastonite crystals without change of the shape (secondary particles).

Examples of fibrous materials to be used in the present invention include organic and inorganic fibrous materials. Exemplary of useful organic fibers are wood pulp, waste paper pulp, knots residuum, flax, fiber, rayon and like cellulosic fibers and polyamide, polyester, vinylon, polyolefin and like synthetic fibers. Illustrative of useful inorganic fibers are rockwool, slag wool, glass fibers, silica fibers, ceramic fibers, carbonaceous fibers, inorganic whiskers, asbestos and the like. These fibrous materials are usable singly or at least two of them can be used in suitable mixture.

According to the present invention, boards of great strength can be produced by even the use of a small amount of fibrous material in mixture with a major amount of calcium silicate crystals. Consequently it is possible to obtain boards having a great strength and an outstanding incombustibility by use of a small amount of organic fibers. Noninflammable boards of great strength can be also produced by use of inorganic fibers alone without use of organic fibers. The content of fibrous material in the molded body is as low as 2 to 30% by weight. The boards of the invention composed predominantly of calcium silicate crystals exhibit an outstanding strength and can be produced with a high moldability. The content of fibrous material is preferably 2 to 20% by weight, more preferably 5 to 15% by weight.

Polymeric coagulants useful in the invention include, for example, cationic coagulants, anionic coagulants and nonionic coagulants. At least two of these coagulants can be used in suitable mixture. Particularly the conjoint use of cationic coagulant and anionic coagulant is preferred. The coagulant used in producing the board of the invention results in the improvement of filtering property, efficient molding and production of a board of great strength. Examples of useful cationic coagulants are polyethyleneimine, dialkylamineepichlorohydrin polycondensate, polyamideamineepichlorohydrin modified product, cationic polyacrylamide and like cationic polymeric coagulants. Representative of useful anionic coagulants are ammonium polyacrylate, sodium polyacrylate and like polyacrylates and acrylamide-acrylic acid copolymer, etc. Exemplary of useful nonionic coagulants are polyacrylamide, polyethylene oxide and the like.

The content of coagulant in the molded body of the invention is about 0.05 to about 1.0% by weight of the cationic coagulant and about 0.01 to about 1.0% by weight of the anionic or nonionic coagulant are employed, preferably in a total amount of less than about 1.5% by weight.

The coagulants used in the present invention can produce the contemplated effects presumably for the following reasons. The cationic coagulant is caused to become adsorbed on the secondary particles of calcium silicate having a negative electric charge, giving a positive electric charge to the secondary particles with the result that the calcium silicate secondary particles are strongly united with one another by the anionic or nonionic coagulant, thereby improving the filtering property of solids in the slurry.

When required, the board of the invention may contain an inactive substance such as a carbonaceous substance, carbide, nitride, silicide, metallic oxide and the like to improve the heat insulation properties, particularly over a high temperature range. At least one of carbonaceous substance, carbide, nitride, silicide and metallic oxide is used as said inactive substance. Examples of useful inactive substances are carbonaceous substances such as active carbon, charcoal, coal, carbon black, graphite, etc.; carbides such as silicon carbide, boron carbide, titanium carbide, etc.; nitrides such as silicon nitride, boron nitride, titanium nitride, etc.; silicides such as calcium silicide, etc.; and metallic oxides such as iron oxides (hematite, magnetite, etc.), titanium oxides (rutile, etc.), tin oxides, manganese oxides, zirconium oxides, ilmenite, zircon, chromite, cerium oxides, lanthanum oxides, yttrium oxides, neodymium oxides, etc. These substances are usable singly or at least two of them can be used in mixture. It is suitable that the active substance be usually about 0.001 to about 120 $\mu$m, preferably 0.001 to 100 $\mu$m, in particle size.

The content of the inactive substance in the board of the invention can vary over a wide range and ranges usually from about 2 to about 70% by weight, preferably about 5 to about 50% by weight.

For producing the board of the invention, an aqueous slurry of secondary particles of calcium silicate crystals is prepared first. The aqueous slurry can be prepared by subjecting a calcareous material and siliceous material to a hydrothermal synthesis reaction as described hereinbefore, or by dispersing the secondary particles in water. To the aqueous slurry are added a fibrous material, a coagulant, and when required, an inactive substance. The amounts of these components used are accommodated to the desired contents thereof, calculated as the solids, in the board. The inactive substance may be added to the starting slurry containing siliceous and calcareous materials prior to preparation of secondary particles of calcium silicate crystals, followed by a hydrothermal synthesis reaction of slurry. Thereby the inactive substance is united with the secondary particles of calcium silicate crystals, resulting in an increase in the strength of the board.

Then thin sheets are formed from an aqueous slurry which contains secondary particles of calcium silicate crystals, a fibrous material, a coagulant and when required, an inactive substance. In formation of thin sheets, it is desirable to adjust the solids concentration of slurry to about 0.2 to about 3% by weight.

Thin sheets are formed by any of continuous methods (cylinder-type, Fourdrinier-type, short wire-type or the like) and batchwise methods (CTC method, Chapman method or the like). A plurality of thin sheets thus formed are superposed over one another into a laminate sheet. Preferably the laminate sheet is then cut by a cutter as required and press-molded to a predetermined thickness with a hot press or the like with heating while being dried. A suitable heating temperature is about 150 to about 200°C and an adequate molding pressure is about 10 to about 50 kg/cm$^2$.

In the laminate sheet thus obtained by press-molding of thin sheets with heating, the secondary particles of calcium silicate crystals in each thin sheet are interlocked with one another so that each thin sheet is strengthened and the secondary particles of calcium silicate crystals on the surface of each thin sheet are interconnected with one another, giving a board of great strength in which the thin sheets are firmly united with one another. The board of the invention as observed in cross section under an optical microscope (at a magnification of 70 X) shows that the layers are integrally united with one another by the secondary particles of calcium silicate crystals and that the boundaries between the layers can not be microscopically recognized.

The thin sheets constituting the board of the invention each have a thickness of about 2 mm or less, preferably about 0.2 to about 1.0 mm. The board of the invention is comprised of a plurality of thin sheets, more specifically 3 to 200 thin sheets, which are formed into an integral sheet. The board of the invention even with a large thickness has a high bending strength which is uniform therethrough. Thus it is possible to obtain a board 20 mm or more in thickness and great in the strength.

The present invention is described below in greater detail with reference to the following Preparation Example and Examples in which the parts and the percentages are all by weight unless otherwise specified.

Preparation Example

A starting slurry was prepared by adding 49 parts of lime slaked with hot water at about 85°C and 51 parts of silica stone powder (CaO/SiO$_2$ mole ratio of 1.0) to water in 12 times the amount of the solids. The starting slurry was subjected with stirring to a hydrothermal synthesis reaction under a pressure of 15 kg/cm$^2$ with stirring for 4 hours, giving an aqueous slurry of secondary particles of xonotlite crystals.

Example 1

The secondary particles of xonotlite crystals and fibers were mixed in specific proportions, and the mixture was adjusted with water to a concentration of 2.0%. The mixture was mixed with 0.1% of a cationic coagulant, "Polymaster R607" (product of Hakuto Chemical Co., Ltd., dimethylamine-epichlorohydrin polycondensate) and a specific amount of an anionic coagulant, "Polymaster R623S" (product of Hakuto Chemical Co., Ltd., polyacrylamide-polyacrylic acid copolymer), producing a starting slurry.

The thus obtained starting slurry was formed into green thin sheets of 0.7 mm thickness with use of a short wire-type forming device. Thirty green thin sheets thus formed were superposed over one another and press-molded with heating at 185°C with a hot press to produce a 9 mm-thick molded board of calcium silicate.

Table 1 shows the amounts of components and properties of the molded boards.

Table 1

| | Specimen No. | 1 | 2 | 3 | 4 | 5 |
|---|---|---|---|---|---|---|
| Amount (part by weight) | Xonotlite secondary particles | 79.7 | 84.7 | 89.7 | 89.7 | 95.7 |
| | Pulp (NBKP) | 20 | 15 | 8 | 2 | |
| | Glass fibers | | | 2 | 2 | 4 |
| | Ceramic fibers | | | | 8 | |
| | Cationic coagulant (Polymaster R-607) | 0.1 | 0.1 | 0.1 | 0.1 | 0.1 |
| | Anionic coagulant (Polymaster R-623S) | 0.2 | 0.2 | 0.2 | 0.2 | 0.2 |
| Properties of molded product | Thickness of molded product (mm) | 9 | 9 | 9 | 9 | 9 |
| | Number of laminated sheets (sheet) | 30 | 30 | 30 | 30 | 30 |
| | Density (g/cm$^3$) | 0.639 | 0.631 | 0.628 | 0.624 | 0.630 |
| | Bending strength (kg/cm$^2$) | 161 | 149 | 140 | 125 | 105 |
| | Thermal linear shrinkage percentage (%) | 1.72 | 1.44 | 1.17 | 1.00 | 1.17 |
| | Incombustibility | Almost incombustible | Incombustible | Incombustible | Incombustible | Incombustible |
| | Fabrication property | Good | Good | Good | Good | Good |

5

The properties of molded products in Table 1 were determined by the following methods.

1) Density, bending strength and thermal linear shrinkage percentage

According to JIS A 9510. The thermal linear shrinkage percentages are those obtained by heating for 3 hours at 1000°C.

2) Incombustibility

According to Notice No.1828 of Ministry of Construction, Japan.

3) Fabrication property

Among the molded products tested by e.g., nailing and sawing, those which neither developed any crack nor chipped at any edge were rated good.

Example 2

The secondary particles of xonotlite crystals, pulp and glass fibers were mixed in specific proportions and the mixture was adjusted with water to a concentration of 2.0%. A specific amount of a polymeric coagulant was added to the mixture, giving a starting slurry.

The starting slurry thus obtained was adjusted with water to a concentration of 0.6% (liquid amount 5ℓ). The slurry was made into green thin sheets by a tapping machine having a filtration area of 32 X 32 cm and using a 60-mesh metal gauge and the filtering property was determined.

Ninety green thin sheets of about 1 mm thickness thus obtained were superposed over one another and press-molded in the same manner as in Example 1, producing a 40 mm-thick molded board of calcium silicate.

The amounts of components and properties of the molded boards were shown in Table 2.

Table 2 also shows, for comparison, the properties of molded board produced in the same manner as above using only one coagulant or without use of a coagulant under the column of comparison example.

Table 2

| Specimen No. | 1 | 2 | Comp. Ex.1 | Comp. Ex.2 | Comp. Ex.3 | Comp.Ex. 4 |
|---|---|---|---|---|---|---|
| Proportions of components (%) | | | | | | |
| Xonotlite secondary particles | 89.7 | 89.7 | 89.7 | 89.7 | 89.7 | 90 |
| Pulp | 8 | 8 | 8 | 8 | 8 | 8 |
| Glass fibers | 2 | 2 | 2 | 2 | 2 | 2 |
| Cationic coagulant | | | | | | |
| Polymaster R-607 | 0.1 | 0.1 | | | | |
| Aronflock C-325 | | | 0.3 | | | |
| Anionic coagulant | | | | | | |
| Polymaster R-623S | 0.2 | | | 0.3 | | |
| Nonionic coagulant | | | | | | |
| Polymaster R-620 | | 0.2 | | | 0.3 | |

EP 0 317 631 B1

Table 2 (continued)

| Specimen No. | 1 | 2 | Comp.Ex.1 | Comp.Ex.2 | Comp.Ex.3 | Comp.Ex.4 |
|---|---|---|---|---|---|---|
| Properties of molded product | | | | | | |
| Thickness of molded product (mm) | 40 | 40 | 40 | 40 | 40 | 40 |
| Number of laminated sheets (number) | 90 | 90 | 90 | 90 | 90 | 90 |
| Density of molded product (g/cm$^3$) | 0.625 | 0.632 | 0.635 | 0.629 | 0.630 | 0.584 |
| Bending strength of molded product (kg/cm$^2$) | 135 | 131 | 120 | 119 | 116 | 65 |
| Thermal linear shrinkage percentage (%) | 1.21 | 1.21 | 1.17 | 1.30 | 1.17 | 1.17 |
| Incombustibility | Incombustible | Incombustible | Incombustible | Incombustible | Incombustible | Incombustible |
| Fabrication quality | Good | Good | Good | Good | Good | – |

## Example 3

A starting slurry for forming green thin sheets was prepared by the same method as in Example 1 and was made into green thin sheets of about 0.7 mm thickness by a short wire-type forming device. The green thin sheets thus obtained were wound up under a pressure by a making roll and spread out to obtain a sheet-like body of 17.5 mm thickness. Four sheet-like bodies were superposed and press-molded with a hot

8

press with heating at 185°C, producing a 60-mm thick molded board of calcium silicate.
Table 3 shows the amounts of components and properties of the molded board.

<div align="center">Table 3</div>

| Specimen No. | 1 |
|---|---|
| **Proportions of Components (%)** | |
| Xonotlite secondary particles | 89.7 |
| Pulp (NBKP) | 8.0 |
| Glass fibers (Ceramic fibers) | 2.0 |
| Cationic coagulant (Polymaster R-607) | 0.1 |
| Anionic coagulant (Polymaster R-623S) | 0.2 |
| **Sheets formed by making roll** | |
| Thickness (mm) | 17.5 |
| Number of laminated sheets (number) | 45 |
| Water content (%) | 211 |
| **Properties of molded product** | |
| Thickness (mm) | 60 |
| Number of laminated sheets (number) | 4 |
| Density (g/cm$^3$) | 0.554 |
| Bending strength (kg/cm$^2$) | 115 |
| Thermal linear shrinkage percentage (%) | 1.27 |
| Incombustibility | Incombustible |
| Fabrication property | Good |

Example 4

Quick lime (CaO 95%) was slaked in hot water at 80°C to produce a milk of lime. To the milk of lime was added a powder of silica stone (SiO$_2$ 94%), 7.1 $\mu$m in mean particle size, in the CaO/SiO$_2$ mole ratio of 1.00. Further added were water and a predetermined amount of a powder of titanium oxide (rutile, 1.2 $\mu$m in mean particle size) in such an amount that the total amount of water was 12 times the amount of the solids. In this way, a starting slurry was prepared.

The starting slurry was placed into an autoclave under a saturated vapor pressure of 12 kg/cm$^2$ at 191°C and subjected to a hydrothermal synthesis reaction for 6 hours while being stirred by a stirrer which was rotated at 40 r.p.m. In this way, crystal slurries were produced.

Portions of the crystal slurries obtained above were dried for 24 hours at 100°C and analyzed by X-ray diffractometer. The analysis revealed the peak of xonotlite crystals in all specimens and further the peak of rutile crystals in the specimens containing titanium oxide particles.

Subsequently, 8% of pulp and 2 % of glass fibers were mixed with each of the crystal slurries, and water was added to the mixture to a concentration of 2.0% in the slurry. Further added was a cationic coagulant (Polymaster R-607, product of Hakuto Chemical Co., Ltd.) in an amount of 0.1 % based on the slurry solids and then an anionic coagulant (Polymaster R-623S) (product of Hakuto Chemical Co., Ltd.) in an amount of 0.2 % based on the slurry solids.

Thereafter each slurry thus obtained was adjusted with water to a concentration of 1.0 % and made into green thin sheets of about 0.7 mm thickness with use of a short wire-type forming device. Ninety green thin sheets thus prepared were superposed and press-molded with a hot press to produce a 40 mm-thick molded board of calcium silicate crystals. The properties of each molded boards were determined according to the method of JIS A 9510 with the results shown below in Table 4.

## Table 4

| Specimen No. | 1 | 2 | 3 |
|---|---|---|---|
| **In molded product (%)** | | | |
| Xonotlite secondary particles | 90 | 69.7 | 49.7 |
| Rutile | 0 | 20 | 40 |
| Pulp (NBKP) | 8 | 8 | 8 |
| Glass fibers | 2 | 2 | 2 |
| Moldability | Good | Good | Good |
| **Properties of molded product** | | | |
| Thickness (mm) | 40 | 40 | 40 |
| Number of laminated sheets (number) | 90 | 90 | 90 |
| Density $(g/cm^3)$ | 0.403 | 0.404 | 0.406 |
| Bending strength $(g/cm^2)$ | 65.2 | 49.3 | 42.8 |
| Thermal linear shrinkage percentage (%) | 1.20 | 1.19 | 1.22 |
| **Thermal conductivity (Kcal/m.h.°C)** | | | |
| 70°C | 0.063 | 0.056 | 0.052 |
| 150°C | 0.071 | 0.061 | 0.054 |
| 250°C | 0.082 | 0.067 | 0.056 |
| 350°C | 0.094 | 0.073 | 0.058 |

Example 5

Slurries of xonotlite crystals were produced by repeating the same procedure as in Example 4 with the exception of not adding titanium oxide particles.

To portions of the slurries was added the specific inorganic substance in such an amount that the molded product contains 25% of inorganic substance, and the slurry was molded in the same manner as in Example 1, producing a 25 mm-thick molded board of calcium silicate crystals (The molded board consists of 64.7% of secondary particles of xonotlite crystals, 25% of inactive substance, 8% of pulp, 2% of glass fibers, 0.1% of cationic coagulant and 0.2% of anionic coagulant).

11

Table 5

| Specimen No. | 4 | 5 | 6 | 7 |
|---|---|---|---|---|
| Inactive substance | | | | |
| Kind | Silicon carbide | Iron oxide (Hematite) | Ilmenite | Manganese oxide |
| Content in molded product (%) | 25 | 25 | 25 | 25 |
| Mean particle size (μm) | 3.5 | 0.8 | 5.4 | 4.0 |
| Properties of molded product | | | | |
| Bulk density (g/cm$^3$) | 0.410 | 0.408 | 0.400 | 0.408 |
| Bending strength (kg/cm$^2$) | 45.3 | 44.2 | 45.1 | 46.7 |
| Thermal conductivity (Kcal/m.h.°C) | | | | |
| Average temperature (°C) | | | | |
| 70 | 0.056 | 0.056 | 0.057 | 0.055 |
| 150 | 0.059 | 0.059 | 0.059 | 0.058 |
| 250 | 0.064 | 0.064 | 0.065 | 0.064 |
| 350 | 0.071 | 0.072 | 0.075 | 0.071 |

Table 5 shows the properties of the molded products obtained above.

Table 5 (continued)

| Specimen No. | 8 | 9 | 10 |
|---|---|---|---|
| Inactive substance | | | |
| Kind | Silicon nitride | Cerium oxide | Titanium oxide (Rutile) |
| Content in molded product (%) | 25 | 25 | 25 |
| Mean particle size (μm) | 5.0 | 1.8 | 1.2 |
| Properties of molded product | | | |
| Bulk density (g/cm³) | 0.411 | 0.405 | 0.409 |
| Bending strength (kg/cm²) | 44.1 | 45.0 | 44.3 |
| Thermal conductivity (Kcal/m.h.°C) Average temperature (°C) | | | |
| 70 | 0.056 | 0.057 | 0.055 |
| 150 | 0.059 | 0.059 | 0.058 |
| 250 | 0.064 | 0.065 | 0.063 |
| 350 | 0.071 | 0.075 | 0.070 |

## Claims

1. A board of calcium silicate crystals, characterized in that the board is composed of a plurality of laminated thin sheets, each of the thin sheets having a thickness of 2 mm or less, containing secondary particles of calcium silicate crystals, a fibrous material and a polymeric coagulant adsorbed on the surface of the secondary particles, and being formed from the secondary particles interconnected with one another, said coagulant being a mixture of a cationic coagulant with an anionic coagulant or a nonionic coagulant, with the content of the cationic coagulant being from 0,5 to 1.0% by weight and with the content of anionic or nonionic coagulant being from 0.01 to 1.0% by weight of the board, and said superposed thin sheets being firmly united with one another into an integral body by the secondary particles of calcium silicate crystals present on the surface of the sheets.

**2.** A board of calcium silicate crystals according to claim 1 wherein the calcium silicate crystals are tobermorite crystals, xonotlite crystals and/or wollastonite crystals.

**3.** A board of calcium silicate crystals according to claim 1 wherein the content of fibrous material is 2 to 30% by weight.

**4.** A board of calcium silicate crystals according to claim 3 wherein the content of fibrous material is 2 to 20% by weight.

**5.** A board of calcium silicate crystals according to claim 3 wherein the content of fibrous material is 5 to 15% by weight.

**6.** A board of calcium silicate crystals according to claim 1 wherein the thin sheet contains at least one inactive substance selected from a carbonaceous substance, carbide, nitride, silicide and metallic oxide, as well as the secondary particles of calcium silicate crystals, fibrous material and coagulant.

**7.** A board of calcium silicate crystals according to claim 6 which contains 2 to 70% by weight of the inactive substance.

**8.** A board of calcium silicate crystals according to claim 6 wherein the carbonaceous substance is at least one of active carbon, charcoal, coal, carbon black and graphite; the carbide is at least one of silicon carbide, boron carbide and titanium carbide; the nitride is at least one of silicon nitride, boron nitride and titanium nitride; the silicide is calcium silicide; and the metallic oxide is at least one of iron oxides, titanium oxides, tin oxides, manganese oxides, zirconium oxides, ilmenite, zircon, chromite, cerium oxides, lanthanum oxides, yttrium oxides and neodymium oxides.

**Patentansprüche**

**1.** Platte aus Calciumsilikatkristallen, dadurch gekennzeichnet, daß die Platte zusammengesetzt ist aus einer Mehrzahl laminierter dünner Platten, wobei jede der dünnen Platten eine Stärke von 2 mm oder weniger aufweist, enthaltend sekundäre Teilchen aus Calciumsilikatkristallen, ein faseriges Material und ein polymeres Koagulans adsorbiert auf der Oberfläche der sekundären Teilchen, und geformt aus den sekundären Teilchen, die untereinander verbunden sind, wobei das Koagulans ein Gemisch aus einem kationischen Koagulans mit einem anionischen Koagulans oder einem nicht-ionischen Koagulans ist, mit einem Gehalt an kationischem Koagulans von 0,05 bis 1,0 Gew.-% und mit einem Gehalt an anionischem oder nicht-ionischem Koagulans von 0,01 bis 1,0 Gew.-% der Platte, und die übereinandergelegten dünnen Platten eng miteinander zu einem Integralkörper durch die sekundären Teilchen der auf der Oberfläche der Platten vorliegenden Calciumsilikatkristalle vereinigt sind.

**2.** Platte aus Calciumsilikatkristallen nach Anspruch 1, wobei die Calciumsilikatkristalle Tobermoritkristalle, Xonotlitkristalle und/oder Wollastonitkristalle sind.

**3.** Platte aus Calciumsilikatkristallen nach Anspruch 1, wobei der Gehalt an faserigem Material 2 bis 30 Gew.-% beträgt.

**4.** Platte aus Calciumsilikatkristallen nach Anspruch 3, wobei der Gehalt an faserigem Material 2 bis 20 Gew.-% beträgt.

**5.** Platte aus Calciumsilikatkristallen nach Anspruch 3, wobei der Gehalt an faserigem Material 5 bis 15 Gew.-% beträgt.

**6.** Platte aus Calciumsilikatkristallen nach Anspruch 1, wobei die dünne Platte mindestens eine inaktive Substanz ausgewählt aus einer kohlenstoffhaltigen Substanz, einem Carbid, Nitrid, Silicid und Metalloxid, sowie die sekundären Teilchen aus Calciumsilikatkristallen, faserigem Material und Koagulans enthält.

**7.** Platte aus Calciumsilikatkristallen nach Anspruch 6, enthaltend 2 bis 70 Gew.-% der inaktiven Substanz.

EP 0 317 631 B1

**8.** Platte aus Calciumsilikatkristallen nach Anspruch 6, wobei die kohlenstoffhaltige Substanz mindestens eine von Aktivkohle, Holzkohle, Kohle, Ruß und Graphit ist; das Carbid mindestens eines von Siliciumcarbid, Borcarbid und Titancarbid ist; das Nitrid mindestens eines von Siliciumnitrid, Bornitrid und Titannitrid ist; das Silicid Calciumsilicid ist und das Metalloxid mindestens eines von Eisenoxiden, Titanoxiden, Zinnoxiden, Manganoxiden, Zirkonoxiden, Ilmenit, Zirkon, Chromit, Ceroxiden, Lanthanoxiden, Yttriumoxiden und Neodymoxiden ist.

**Revendications**

**1.** Plaque de cristaux de silicate de calcium, caractérisée en ce que la plaque est composée de plusieurs feuilles minces feuilletées, chacune de ces feuilles minces ayant une épaisseur de 2 mm ou moins, contenant des particules secondaires de cristaux de silicate de calcium, un matériau fibreux et un coagulant polymère adsorbé sur la surface des particules secondaires, et étant formée à partir des particules secondaires réunies les unes aux autres, ce coagulant étant un mélange d'un coagulant cationique et d'un coagulant anionique ou d'un coagulant non ionique, la teneur en coagulant cationique étant de 0,05 à 1,0% en poids et la teneur en coagulant anionique ou non ionique étant de 0,01 à 1,0% en poids de la plaque et ces feuilles minces superposées étant solidement réunies les unes aux autres en un corps intégral par les particules secondaires de cristaux de silicate de calcium se trouvant à la surface des feuilles.

**2.** Plaque de cristaux de silicate de calcium suivant la revendication 1, dans laquelle les cristaux de silicate de calcium sont des cristaux de tobermorite, des cristaux de xonotlite et/ou de cristaux de wollastonite.

**3.** Plaque de cristaux de silicate de calcium suivant la revendication 1, dans laquelle la teneur en matériau fibreux est de 2 à 30% en poids.

**4.** Plaque de cristaux de silicate de calcium suivant la revendication 3, dans laquelle la teneur en matériau fibreux est de 2 à 20% en poids.

**5.** Plaque de cristaux de silicate de calcium suivant la revendication 3, dans laquelle la teneur en matériau fibreux est de 5 à 15% en poids.

**6.** Plaque de cristaux de silicate de calcium suivant la revendication 1, dans laquelle la feuille mince contient au moins une substance inactive choisie parmi une substance carbonée, un carbure, un nitrure, un siliciure et un oxyde métallique, ainsi que les particules secondaires de cristaux de silicate de calcium, le matériau fibreux et le coagulant.

**7.** Plaque de cristaux de silicate de calcium suivant la revendication 6, qui contient 2 à 70% en poids de la substance inactive.

**8.** Plaque de cristaux de silicate de calcium suivant la revendication 6, dans laquelle la substance carbonée est au moins une substance choisie parmi le carbone actif, le charbon, la houille, le noir de carbone et le graphite; le carbure est au moins un carbure parmi le carbure de silicium, le carbure de bore et le carbure de titane; le nitrure est au moins un nitrure choisi parmi le nitrure de silicium, le nitrure de bore et le nitrure de titane; le siliciure est les siliciure de calcium; et l'oxyde métallique est au moins un oxyde choisi parmi les oxydes de fer, les oxydes de titane, les oxydes d'étain, les oxydes de manganèse, les oxydes de zirconium, l'ilménite, le zircon, une chromite, les oxydes du cérium, les oxydes de lanthane, les oxydes d'yttrium et les oxydes de néodyme.